# EUROPÄISCHE PATENTANMELDUNG

(11) **EP 1 629 953 A1**
(43) Veröffentlichungstag der Anmeldung: **01.03.2006**
(21) Anmeldenummer: 05107544.8
(22) Anmeldetag: 17.08.2005
(51) Int. Cl.: B29C 41/28, B29C 41/32

(54) **Verfahren zur Herstellung von bahnförmigen Gebilden**

(30) Priorität: 25.08.2004 DE 102004041077
(71) Anmelder: Voith Fabrics Patent GmbH, 89522 Heidenheim (DE)
(72) Erfinder: Sayers, Ian, Ribchester, Nr. Preston, Lancs.BB2 5LE, (GB); Spence, Michael, Blackburn, Lancs. BB2 5LE (GB)

(57) **Zusammenfassung**

Verfahren zur Herstellung eines einstückigen, bahnförmigen Gebildes, welches aus mehreren übereinander angeordneten Lagen aus Kunststoffmaterial aufgebaut ist, bei dem das Kunststoffmaterial lagenweise auf eine ausgedehnte Arbeitsfläche aufgebracht wird und bei dem das Kunststoffmaterial jeder Lage vor der Zugabe des Kunststoffmaterials der nächstfolgenden Lage weiterbearbeitet wird, wobei die Herstellung zumindest einer Lage die folgenden Schritte beinhaltet: Aufbringen eines strahlungsreaktiven Kunststoffmaterials (40), welches Bestandteil der Lage werden soll, auf die Arbeitsfläche oder die vorherige Lage, Bestrahlen zumindest eines Abschnitts des strahlungsreaktiven Kunststoffmaterials (40) mit einer Beleuchtungseinrichtung (22), welche auf den Abschnitt ein hell / dunkel Muster projektiert, wodurch im Abschnitt bestrahlte und unbestrahlte Bereiche des strahlungsreaktiven Kunststoffmaterials gebildet werden, Ablösen der bestrahlten oder unbestrahlten Bereiche des Kunststoffmaterials.

## Beschreibung

Diese Erfindung betrifft die Herstellung von bahnförmigen Gebilden, insbesondere Papiermaschinenbespannungen, wie Formiersiebe, Pressfilze, Trockensiebe und anderen industriellen Bespannungen, wie Transferbänder zur Verwendung in einer Papiermaschine. Die bahnförmigen Gebilde der Erfindung können auch als Übertragungs-/Förderbänder oder als Filter in anderen Maschinen als Papiermaschinen Anwendung finden.

Papier wird üblicherweise hergestellt, indem in der Formierpartie eine Papierfasersuspension auf einem Formiersieb oder zwischen zwei Formiersieben eingebracht und anschließend sukzessive entwässert wird. Anschließend wird die so gebildete Faserstoffbahn mit einem Trockengehalt von ca. 1% zur weiteren Entwässerung mittels Pressfilzen durch die Pressenpartie und danach mittels Trockensieben durch die Trockenpartie der Papiermaschine geleitet. Im Falle von Tissue-Papiermaschinen wird die Papierbahn bspw. von dem Pressfilz auf einen Yankee-Trockenzylinder übertragen und dann gekreppt.

Papiermaschinenbestehen bestehen traditionell aus einem Gewebe. Wenn Kett- und Schussfäden verwoben werden, bildet sich ein sog. "Höcker" an ihrem Kreuzungspunkt. Diese Höcker neigen dazu, die Papierschicht, die auf der Bespannung gebildet wird, zu prägen / zu markieren was in den meisten Fällen unerwünscht ist. In den letzten Jahren wurden verschiedene Verfahren vorgeschlagen, um Papiermaschinenbespannungen mit reduzierter Markierungsneigung herzustellen.

GB 1,053,954 beschreibt ein Band, welches zwei Lagen aus parallelen polymeren Filamenten umfasst, wobei die Lagen derart aneinander befestigt sind, dass die Filamente einer Lage in einem Winkel in Bezug auf die Filamente in einer anderen Lage angeordnet sind. Eine solche Anordnung ist nicht dauerhaft und folglich ist dieser Stoff kommerziell nicht brauchbar.

US 3,617,442 beschreibt ein Formiersieb, welches eine Bahn aus synthetischem, flexiblem Schaum mit Poren, wie Polyurethan, umfasst. Dieser wird durch eine Reihe von Polyesterfäden, ein grobes Drahtgitter oder eine dünne, flexible Metall- oder Kunststoffschicht verstärkt. Eine solche Anordnung würde bei einer etwaigen Kommerzialisierung eine schlechte Abriebbeständigkeit aufweisen.

GB 2,051,154 betrifft ein Band in dem ein Basisstoff welches eine Grundstruktur aus einer Reihe ineinander übergreifender Spiralen aufweist, die durch Steckdrähte miteinander verbunden sind. Solche Bänder sind wegen der Einschränkungen hinsichtlich Dicke und Material nur für bestimmte Anwendungen geeignet.

US 4,541,895 beschreibt eine Papiermaschinenbespannung, welche aus mehreren Schichten besteht, die zur Bildung eine Bandes aneinander laminiert sind. Die Schichten werden durch Laserbohren perforiert. Solche Schichten bestehen aus einem nicht orientierten Polymermaterial.

Die GB 2,235,705 betrifft ein Basisgewebe für Pressfilze. Hier wird eine Anordnung von mit einer Hülle umgebenen Fäden, wobei der Kern einen höheren Schmelzpunkt aufweist als die Hülle, in einer beabstandeten, parallelen Anordnung zu Umfangsnuten einer Druckrolle geleitet, die in einem spaltbildenden Verhältnis zu einer Presswalze angeordnet ist. Das Hüllmaterial wird dann geschmolzen, während sich die Fäden in und durch den Walzenspalt bewegen. Hierdurch wird überschüssiges, geschmolzenes Hüllenmaterial in seitliche und leere Umfangsnuten in der Rolle gepresst, um Strukturelemente zwischen benachbarten Fäden zu bilden. Durch Verbindung gleicher Streifen kann ein breites Band gebildet werden. Anschließend wird eine Fasermatte an das Basisgewebe genadelt, um ein Pressfilz zu bilden. Perforierungen des gitterförmigen Basisgewebes verlaufen hierbei gerade durch das Gewebe.

GB 2,241,915 betrifft ein Verfahren zur Herstellung einer Papiermaschinenbespannung, in dem eine Lage aus photopolymerem Harz auf ein sich bewegendes Band aufgebracht wird. Zur Herstellung wird eine sich bewegende, selektiv transparente Maske über dem Harz positioniert und anschließend das Harz durch die Maske bestrahlt, um ein teilweises Härten der Teile der Harzlage zu bewirken, die mit den transparenten Bereichen der Maske ausgerichtet sind. Nach der Bestrahlung werden ungehärtete Bereiche des Harzes durch ein Fluid entfernt. Eine Endhärtung des Harzes erfolgt bspw. thermisch. Die so gebildete löchrige Schicht kann mit Fäden oder Fasern verstärkt werden. Auch hier verlaufen Löcher gerade durch die Bespannung. Dies kann bei der Blattbildung der Papierbahn unerwünscht sein, da hierdurch hydraulische Impulse von der Maschinenseite durch die Bespannung ungehindert zur Papierbahn gelangen können, was zu hydraulischen Markierungen führen kann.

GB 2,283,991 betrifft eine Papiermaschinenbespannung für den Einsatz in der Pressenpartie, die aus teilweise geschmolzenen Partikeln hergestellt wird. Die Papiermaschinenbespannung weist ein Verstärken auf, die in der gebildeten Struktur eingebettet sind.

Es ist die Aufgabe der vorliegenden Erfindung ein Verfahren vorzuschlagen, durch welches ein ausgedehntes, einstückiges und bahnförmiges Gebilde, insbesondere eine Papiermaschinenbespannung oder ein Bestandteil einer Papiermaschinenbespannung, anwendungsspezifisch und kostengünstig hergestellt werden kann.

Die Aufgabe wird durch ein Verfahren nach dem Patentanspruch 1 gelöst.

Erfindungsgemäß wird ein Verfahren zur Herstellung eines einstückigen, bahnförmigen Gebildes, welches aus mehreren übereinander angeordneten Lagen aus Kunststoffmaterial aufgebaut ist bereitgestellt, bei dem das Kunststoffmaterial lagenweise auf eine ausgedehnte Arbeitsfläche aufgebracht wird und bei dem das Kunststoffmaterial jeder Lage vor der Zugabe des Kunststoffmaterials der nächstfolgenden Lage weiterverarbeitet wird. Hierbei beinhaltet die Herstellung zumindest einer Lage die Schritte, dass ein strahlungsreaktives Kunststoffmaterial, welches Bestandteil der zu bildenden Lage werden soll, auf die Arbeitsfläche oder die vorher hergestellte Lage aufgebracht wird, dass zumindest ein Abschnitt des strahlungsreaktiven Kunststoffmaterials bestrahlt wird mit einer Beleuchtungseinrichtung, welche auf den Abschnitt ein hell / dunkel Muster projektiert. Hierdurch werden im bestrahlten Abschnitt Bereiche des strahlungsreaktiven Kunststoffmaterials bestrahlt und andere Bereiche des strahlungsreaktiven Kunststoffmaterials nicht bestrahlt.

Abhängig davon, ob es sich bei dem strahlungsreaktiven Kunststoffmaterial um ein solches handelt, welches sich bei Einwirkung der eingestrahlten Strahlung zersetzt oder aushärtet, werden entweder bestrahlte oder unbestrahlte Bereiche des Kunststoffmaterials, d.h. solche die nicht Bestandteil der hergestellten Lage werden, abgelöst.

Handelt es sich bspw. um ein strahlungsreaktives Kunststoffmaterial, welches durch die Bestrahlung aushärtet, so bilden die bestrahlten und somit ausgehärteten Bereiche die herzustellende Lage, wenn die nicht bestrahlten und somit nicht ausgehärteten Bereiche abgelöst sind.

Handelt es sich bspw. um ein strahlungsreaktives Kunststoffmaterial, welches sich durch die Bestrahlung zersetzt, so bilden die nicht bestrahlten und somit nicht zersetzten Bereiche die herzustellende Lage, wenn die bestrahlten und somit zersetzten Bereiche abgelöst sind. Die nicht bestrahlten Bereiche werden dann in einem nachfolgenden Härtungsschritt ausgehärtet.

Gemäß der Erfindung handelt es sich um ein Verfahren zur Herstellung eines einstückigen, bahnförmigen Gebildes, welches aus mehren aufeinander angeordneten Lagen aufgebaut ist. Hierbei wird zumindest eine der Lagen durch ein strahlungsreaktives Kunststoffmaterial gebildet, auf welches bei der Bestrahlung ein hell / dunkel Muster projektiert wird, wodurch bei der Bestrahlung der gesamte Abschnitt auf den das hell / dunkel Muster projektiert wird, in einem Bestrahlungsschritt bearbeitet wird. Dies ist insbesondere im Unterschied zu einem Verfahren zu sehen, bei dem ein Muster durch "Schreiben" des Musters mit der Beleuchtungseinrichtung erzeugt wird. Das erfindungsgemäße Verfahren ist somit bedeutend kostengünstiger als ein "Schreib"-Verfahren.

Erfindungsgemäß kann es vorgesehen sein, dass sich die Beleuchtungseinrichtung und die zu bearbeitende Lage des strahlungsreaktiven Kunststoffmaterials während der Bestrahlung relativ zueinander bewegen oder dass sich die Beleuchtungseinrichtung und die zu bearbeitende Lage des strahlungsreaktiven Kunststoffmaterials während der Bestrahlung relativ zueinander nicht bewegen.

Im ersten Fall können bspw. linienförmige Strukturen mit Längserstreckung in Richtung der Relativbewegung zwischen Beleuchtungseinrichtung und bearbeiteter Lage erzeugt werden. Im zweiten Fall können komplexe Muster, welche aus vielen einzelnen Punkten / Pixeln aufgebaut sind erzeugt werden. Im diesem Fall findet die Bestrahlung derart statt, dass ein Abschnitt bestrahlt wird und dass anschließend ein an den bereits bestrahlten Abschnitt angrenzender Abschnitt bestrahlt wird. Vorzugsweise wird ein zumindest abschnittweise perforiertes, bahnförmiges Gebilde geschaffen. Um nach Ablösen der bestrahlten oder unbestrahlten Bereiche den Aufbau der nächstfolgenden Lage zu unterstützen sieht eine bevorzugte Ausführungsform der Erfindung vor, dass die abgelösten Bereiche mit einem Opfermaterial ausgefüllt werden.

Demgemäß ist es sinnvoll, wenn das Opfermaterial einer Lage frühestens nach dem Aufbringen der nächstfolgenden Lage abgelöst wird.

Vorzugsweise werden das abzulösende Kunststoffmaterial und das abzulösende Opfermaterial durch ein flüssiges und / oder gasförmiges Medium abgelöst.

Als geeignet hat herausgestellt, wenn als Opfermaterial Wachs Verwendung findet.

Gemäß einer bevorzugten Ausführungsformen des erfindungsgemäßen Verfahrens ist das strahlungsreaktive Kunststoffmaterial beim Aufbringen in flüssigem oder festen Zustand.

Vorzugsweise ist das strahlungsreaktive Kunststoffmaterial UV- oder IR- härtend.

Bei dem UV- härtenden Kunststoffmaterial handelt es sich vorzugsweise um ein acryliertes Epoxidharz.

UV- härtbare Harze werden für gewöhnlich aus einem flüssigen Zustand gehärtet. Zur Verarbeitung der flüssigen Harze können passende Eingrenzungsvorrichtungen erforderlich sein, zum Beispiel kann die ausgedehnte Arbeitsfläche in einen Trog oder ein Bad eingelegt werden, der/das das flüssige Harz enthält, oder die Arbeitsfläche kann mit Eingrenzungszäunen versehen sein. Zur Vermeidung oder Verhinderung einer Oxidation kann das von den Zäunen umschlossene Volumen eine inerte Atmosphäre, wie CO₂ oder N₂ enthalten. Die aufeinanderfolgenden Lagen können durch Anheben der Abgabevorrichtungen und von Teilen der Eingrenzungsvorrichtung nach jeder Behandlungsstufe um eine Höhe, die der erforderlichen Schichtdicke entspricht, gebildet werden. Um eine ebene Oberfläche des aufgebrachten Kunststoffmaterials zu erhalten, kann die Verwendung einer Streichvorrichtung notwendig sein. Somit können auch Abweichungen der Arbeitsfläche von einer ebenen Fläche auszugleichen werden. Wenn das Harz in jeder Lage als Fluidfilm aufgetragen wird, zusammengehalten durch die Oberflächenspannung, ist es denkbar, dass komplexe Eingrenzungsmittel, wie Dämme, oder eine präzise Nivellierung nicht erforderlich sind.

Das IR- härtende Kunststoffmaterial ist vorzugsweise ein teilchen- oder pulverförmiges thermoplastisches Material, insbesondere PPS und / oder PEEK und / oder Polyolefin und / oder Polyamid.

Das thermoplastische Material wird vorzugsweise in einer trockenen, fein verteilten Form bereitgestellt, wie als Mikrokügelchen oder Submillimeter-Partikel, wie pulvrige Pressmasse. Das Eingrenzen des Materials und eine absolute Ebenheit der Arbeitsfläche sind nicht so sehr ein Problem wie bei Verwendung flüssiger Harze, aber zur Gewährleistung, dass jede Schicht gleichmäßig verteilt ist, kann die Bereitstellung einer speziellen Streichvorrichtung erforderlich sein, die imstande ist, eine gleichförmige Pulverschicht über die ausgedehnte Arbeitsfläche (mehrere Quadratmeter) zu garantieren.

Es sind verschiedene Möglichkeiten denkbar ein hell / dunkel Muster auf die zu bearbeitende Lage zu projektieren. Nach einer besonders bevorzugten Ausführungsform des erfindungsgemäßen Verfahrens ist vorgesehen, dass die Beleuchtungseinrichtung zumindest eine Strahlungsquelle und zumindest eine zwischen Strahlungsquelle und strahlungsreaktivem Kunststoffmaterial angeordnete Maske umfasst, wobei die Maske Bereiche aufweist die bewirken, dass die Strahlung auf das strahlungsreaktive Kunststoffmaterial gelenkt wird und wobei die Maske Bereiche aufweist, die bewirken, dass die Strahlung nicht auf das strahlungsreaktive Kunststoffmaterial gelenkt wird.

Des weiteren ist es vorteilhaft, wenn die Bereiche der Maske, welche die Strahlung auf das strahlungsreaktive Kunststoffmaterial lenken nicht frei einstellbar bzw. veränderbar sind. Demzufolge handelt es sich vorzugsweise um Masken mit programmierbarem hell / dunkel Projektionsmuster. Dennoch ist es auch denkbar Masken mit einem festgelegten d.h. nicht programmierbaren Muster zu verwenden.

Gemäß einer besonders bevorzugten Ausführungsform der Erfindung findet zumindest eine Maske Verwendung, welche ein Spiegelarray aufweist bei dem die die Strahlung auf das strahlungsreaktive Kunststoffmaterial lenkenden oder nicht lenkenden Bereiche der Maske durch die Position und / oder Kippung der einzelnen Spiegel des Spiegelarrays festgelegt werden. Solche Spiegelarrays weisen ca. 1 bis 1,5 Mio. einzeln ansteuerbare Spiegel auf. Solche Spiegelarrays sind bspw. als DMD's (Digital Mirror Device) der Firma Texas Instruments bekannt. DMD's werden bspw. in der US 2002/0155189 beschrieben.

Nach alternativen Verfahren wird nicht die Strahlung der Strahlungsquelle durch ein Spiegelarray zur Bildung eines hell / dunkel Musters abgelenkt, sondern das hell / dunkel Muster dadurch erzeugt, dass die Maske transparente und nicht transparente Bereiche aufweist.

Hierbei ist es möglich, dass die transparenten und nicht transparenten Bereiche der Maske dadurch festgelegt werden, indem selektiv auf einem transparenten Träger nicht transparentes Material abgeschieden wird. Denkbar ist, dass die selektive Abscheidung dadurch bewirkt wird, indem auf dem Träger elektrostatisch geladene Bereiche und elektrostatisch ungeladene Bereiche bspw. durch eine Korona-Entladevorrichtung gebildet werden, sodass das nicht transparente Material selektiv an den geladenen Bereichen abgeschieden wird.

Eine weitere Ausführungsform des erfindungsgemäßen Verfahrens sieht die Verwendung einer Maske vor, welche ein Array aus Flüssigkristallenelementen (LC-Array) oder Halbleiterelementen aufweist, wobei transparente und nicht transparente Bereiche der Maske durch die Einstellung der Strahlungsdurchlässigkeit der einzelnen Elemente des Arrays festgelegt werden. Hierbei ist es bspw. möglich die Strahlungsdurchlässigkeit über die Festlegung von transmitierten und geblockten Polarisationen der Strahlung zu regeln. Die Verwendung von Flüssigkristallarrays ist bspw. in der US 2003/0173714 beschrieben.

Darüber hinaus kann nach einer weiteren Ausgestaltung des erfindungsgemäßen Verfahrens die Verwendung einer Maske vorgesehen sein, welche ein Array von Fresnellinsen aufweist.

Alternativ kann die ein hell / dunkel Muster auf die zu bestrahlende Lage projektierende Beleuchtungseinrichtung im wesentlichen durch ein Array von Strahlungsquellen gebildet werden. Denkbar sind bspw. Diodenarrays, bei denen jede Diode zur Ausbildung eines hell / dunkel Musters einzeln ansteuerbar ist.

Vorzugsweise erfolgt die Ansteuerung der einzelnen Elemente der Arrays oder der einzelnen Elemente / Bereiche der Maske zur Ausbildung der transparenten bzw. strahlenden Bereiche und der nicht transparenten bzw. nicht strahlenden Bereiche programmgesteuert mittels bspw. CAD-Steuerung und / oder STL- Daten.

Eine weitere Ausgestaltung des erfindungsgemäßen Verfahrens sieht vor, dass das Aufbringen und / oder das Weiterverarbeiten der einzelnen Lagen in Längsrichtung und / oder in Querrichtung des bahnförmigen Gebildes abschnittweise erfolgt. Hierbei werden im Fall des Aufbringens des Kunststoffmaterials der Lage üblicherweise aneinander grenzenden Materialabschnitte geschaffen. Bei der Weiterbearbeitung einer Lage kann es sowohl möglich sein, dass Abschnitte der Weiterbearbeitung aneinander grenzen oder einander teilweise überlappen. Üblicherweise fallen in einen Materialabschnitt mehrere Abschnitte der Weiterbearbeitung, bspw. Bestrahlung.

Des weiteren ist es möglich, dass Materialabschnitte aufeinander folgender Lagen relativ zueinander versetzt sind. Dadurch ist es möglich insbesondere die Stabilität des bahnförmigen Gebildes erheblich zu steigern.

Für die Bestrahlung des strahlungsreaktiven Kunststoffmaterials ist es sowohl denkbar , dass mehrere Beleuchtungseinrichtungen in Querrichtung des bahnförmigen Gebildes angeordnet sind, wodurch es möglich ist einen großen Bereich in Quererstreckung des bahnförmigen Gebildes gleichzeitig zu bestrahlen.

Es ist alternativ oder zusätzlich möglich, dass die Beleuchtungseinrichtung in Längsrichtung und / oder in Querrichtung und / oder senkrecht zu Längs- und Querrichtung bewegbar ist. Durch Bewegung in Querrichtung und / oder Längsrichtung ist bspw. eine aufeinander folgende abschnittweise Bestrahlung des aufgebrachten strahlungsreaktiven Kunststoffmaterials möglich. Durch Bewegung senkrecht zu Quer- und Längsrichtung kann der Abstand zwischen zu bestrahlendem Abschnitt und Beleuchtungseinheit bspw. zur Fokusierung der Strahlung (Alignment) verändert werden.

Zur Verstärkung des herzustellenden bahnförmigen Gebildes sieht eine Weiterbildung des erfindungsgemäßen Verfahren vor, dass in eine Lage Fäden eingebettet werden, welche sich in Längsrichtung und / oder quer zur Längsrichtung des bahnförmigen Gebildes erstrecken.

Um das bahnförmige Gebilde in großtechnischem Maßstab herstellen zu können , ist es sinnvoll, wenn die ausgedehnte Arbeitsfläche auf dem das Gebilde aufgebaut wird durch ein umlaufendes Band gebildet wird. Hierbei bildet das umlaufende Band eine Transportstrecke an deren einen Ende ein oder mehrlagige Materialabschnitte des bahnförmigen Gebildes gefertigt werden und an deren anderen Ende die gefertigten Materialabschnitte des bahnförmigen Gebilde abgenommen werden.

Hierbei ist die ausgedehnte Arbeitsfläche insbesondere so ausgelegt, dass ein bahnförmiges Gebilde mit einer Querausdehnung von mehr als 5m, bevorzugt mehr als 8m, besonders bevorzugt von mehr als 11 m hergestellt werden kann.

Vorzugsweise werden mit dem erfindungsgemäßen Verfahren Bestandteile einer Papiermaschinenbespannung, insbesondere um eine Grundstruktur oder Zwischenschicht oder eine Membranschicht eines Formier- oder Trockensiebs oder Pressfilzes oder Transport- oder Glättbandes oder eine Papiermaschinenbespannung, insbesondere um ein Formier- oder Trockensieb oder Pressfilz oder Transport- oder Glättband hergestellt.

Die Dicke der einzelnen Lagen liegt erfindungsgemäß im Bereich zwischen 0,01 mm und 1,0mm, insbesondere 0,025mm und 0,125mm.

Durch das erfindungsgemäße Verfahren ist es somit möglich ein bahnförmiges Gebilde mit drei-dimensionaler Struktur, insbesondere für die Anwendung als Papiermaschinenbespannung mit Perforationen zu schaffen, die sich senkrecht zu Längs- und Querrichtung des Papiermaschinenbespannung mit ändernder Form, Gestalt und Größe erstrecken.

Zur Bildung eines Endlosbandes aus dem bahnförmigen Gebilde ist es möglich dessen gegenüberliegenden Enden mittels einem lithographischen Verfahren miteinander zu verbinden.

Nachfolgend wird die Erfindung anhand von schematischen, nicht maßstäblichen Zeichnungen näher erläutert. Es zeigen:
- Figur 1: eine Vorrichtung in Seitenansicht zur Durchführung einer Ausführungsform des erfindungsgemäßen Verfahrens,
- Figur 2: eine vergrößerte Ausschnittdarstellung der Vorrichtung der Figur 1,
- Figur 3: eine perspektivische Darstellung der Vorrichtung der Figur 1,
- Figur 4: eine Sequenz einer Ausführungsform des erfindungsgemäßen Verfahrens,
- Figur 5: eine Vorrichtung zur Durchführung einer zweiten Ausführungsform des erfindungsgemäßen Verfahrens.
- Figur 6: eine Schnittansicht einer membranartigen Papiermaschinenbespannung, die durch ein Verfahren gemäß der Erfindung hergestellt wird, mit konisch zulaufenden Perforierungen,
- Figur 7: eine Schnittansicht einer zweiten perforierten, membranartigen Papiermaschinenbespannung, welche Verstärkungsfäden enthält, die in der Membran eingebettet sind, und die auch durch ein Verfahren gemäß der Erfindung hergestellt wird;
- Figur 8: eine fragmentarische Ansicht einer Verbindungszone in einem Säumungsverfahren für die Papiermaschinenbespannung; und
- Figur 9: eine Schnittansicht der Verbindungszone von Figur 8.

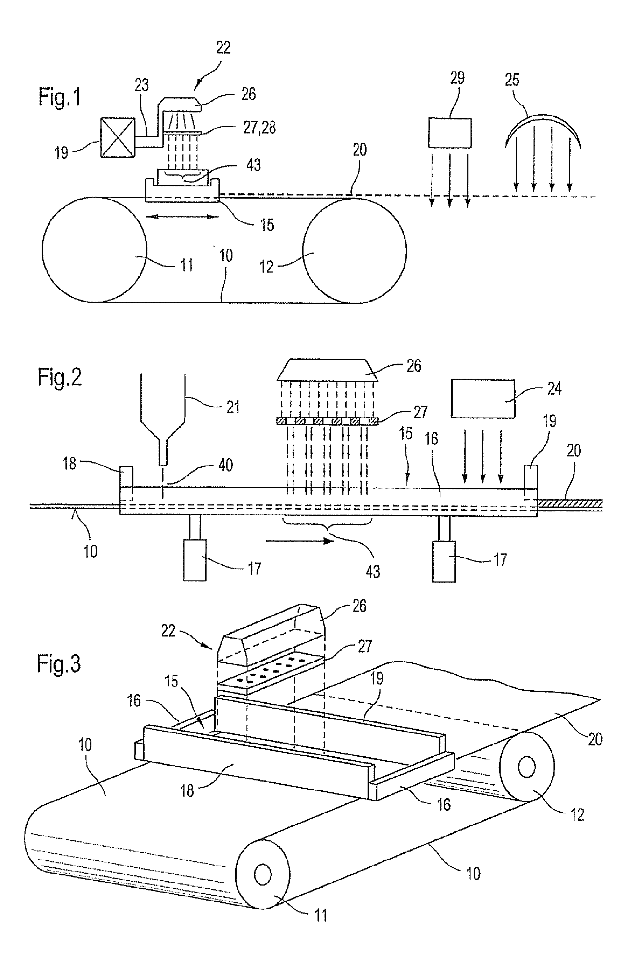

Figuren 1 bis 3 zeigen eine Ausführungsform einer Vorrichtung, die in einem Verfahren gemäß der Erfindung für die Herstellung von Papiermaschinenbespannungen verwendet werden kann, entweder durch die Verwendung eines UV-härtbaren Harzes oder durch Sintern eines teilchenförmigen, thermoplastischen Materials.

Die Vorrichtung umfasst ein Endlosband 10, das auf Endwalzen 11, 12 bereitgestellt ist. Andere Führungs-, Antriebs- und Trägerwalzen wurden der Einfachheit wegen weggelassen. Das Band 10 ist mit einem Fluorpolymermaterial beschichtet, um eine gute Trennoberfläche bereitzustellen, und bildet eine ausgedehnte Arbeitsfläche für die Herstellung von Papiermaschinenbespannungen. Eine Herstellungszone 15 ist bereitgestellt, die sich über die Breite der oberen Transportstrecke des Bandes 10 und in die Laufrichtung des Bandes 10 über eine relativ kurze Strecke erstreckt. Die Zone 15 ist begrenzt von Eingrenzungswänden oder zäunen, welche die Form von Seitenwänden 16 an den Rändern des Bandes annehmen, die auf Kolben 17 zur Höheneinstellung befestigt sind, eine Vorderwand 18, die in die Richtung weist, in der sich das Band 10 nähert, und die in gleitendem Eingriff mit der Oberfläche des Bandes steht, und eine Rückwand 19, die mit Zwischenraum über das Band 10 angehoben werden kann, so dass ein gebildeter Stoff 20 auf der Bandoberfläche, mitgeführt von dem Band, auslaufen kann.

Die entweder vollständig oder teilweise hergestellte Papiermaschinenbespannung 20 wird von dem Band 10 abgenommen und einer weiteren Bearbeitung zugeführt.

Die Papiermaschinenbespannung 20 weist aufeinander folgende Lagen mit zum Beispiel 0,1 mm Dicke auf, so dass die Papiermaschinenbespannung eine Gesamtdicke von zum Beispiel 2mm hat. Demzufolge ist im vorliegenden Fall die Papiermaschinenbespannung aus 20 übereinander angeordneten Lagen aufgebaut.

Die Zeichnungen sind daher nicht maßstabgetreu, da die Wände 16, 18 und 19 nicht mehr als 10 mm hoch sind, während die Breite des Bandes zum Beispiel etwa 11 Meter betragen kann und das Längenmaß (in Bezug auf das Band) der Zone 15 in der Größenordnung von 100 mm sein kann.

Im vorliegenden Ausführungsbeispiel soll nur die Herstellung der einstückigen Papiermaschinenbespannung durch strahlungsreaktives Kunststoffmaterial beschrieben werden, d.h. aber nicht dass eine oder mehrere Lagen der Papiermaschinenbespannung durch andere Weiterbearbeitungsverfahren gefertigt werden können.

Das strahlungsreaktive Kunstmaterial 40 wird von einem oder mehreren Abgabeköpfen 21 (in Fig. 1 oder 3 nicht dargestellt) entweder in Form eines flüssigen, UV-härtbaren Harzes oder als fein verteiltes, teilchenförmiges oder pulvriges, thermoplastisches Material in die Zone abgegeben, um eine Abfolge gleichmäßiger Lagen von etwa 0,1mm Tiefe zu bilden. Zur Herstellung ebener Lagen kann eine Messerrakel oder Streichmaschine (nicht dargestellt) verwendet werden.

Wenn eine Streichmaschine zum Verteilen des Harzes verwendet wird, kann dies zu einer molekularen Orientierung in eine bevorzugte Richtung beitragen.

Das aufgebrachte strahlungsreaktive Kunststoffmaterial wird abschnittweise mit einer Beleuchtungseinrichtung 22 bestrahlt, welche auf den momentan bestrahlten Abschnitt ein hell / dunkel Muster projektiert. Hierdurch werden in jedem Abschnitt bestrahlte und unbestrahlte Bereiche des strahlungsreaktiven Kunststoffmaterials gebildet. Die Beleuchtungseinheit bewegt sich hierbei zwischen jedem Bestrahlungsschritt soweit, dass aneinander grenzende bestrahlte Abschnitte gebildet werden. Während der Bestrahlung bewegen sich Beleuchtungseinrichtung 22 und der zu bestrahlende Abschnitt nicht relativ zueinander.

Die Beleuchtungseinheit 22 ist an einem Schlitten 23 befestigt, so dass sie quer zu dem Band 10 oder rückwärts und vorwärts in die Bewegungsrichtung des Bandes, wie auch hoch und tief in Bezug auf das Band bewegt werden kann.

Die Beleuchtungseinrichtung 22 weist eine Strahlungsquelle 26 und eine zwischen Strahlungsquelle 26 und Herstellungszone 15 angeordnete Maske 27 auf.

Die Strahlungsquelle 26 ist im Falle eines flüssigen, UV-härtbaren Harzes ein UV-Laser, der bspw. bei einer Wellenlänge von z.B. 365nm, 248nm oder 193nm oder 156nm arbeitet.

Im Falle der Verwendung von thermoplastischem Pulver oder Partikeln sind die Laser 22 IR-Laser, die bei einem Leistungsausgang im Bereich von 50 bis 200W arbeiten und die Partikel auf eine ausreichende Temperatur erwärmen, um die Oberflächen der Partikel wenigstens ausreichend zu erweichen, damit die Partikel an ihre Kontaktzonen schmelzen können. Die verwendeten Partikel haben einen Durchmesser in der Größenordnung von 50 Mikron. Eine Druckwalze, nicht dargestellt, kann zum Feststampfen des Pulvers auf ein gleichförmiges Niveau verwendet werden, was auch die Schmelzbindung der Partikel begünstigt. Für gewöhnlich wird beim Sintern von thermoplastischen Kunststoffen die Herstellungszone 15r bei einer Temperatur gerade unter dem Schmelzpunkt des Pulvers gehalten, so dass der Laser nur eine minimale Menge an zusätzlicher Energie zuführen muss, um ein Schmelzen zu bewirken. Ebenso muss der Betrieb in einer inerten N₂- oder CO₂-Atmosphäre ausgeführt werden, um eine Oxidation zu vermeiden, die zu Eingrenzungsproblemen führen kann.

Die Maske 27 ist eine Maske mit programmierbarem hell / dunkel Projektionsmuster. Die Maske weist einen für UV- oder IR-Strahlung transparenten Träger 28 auf. Zur Einstellung des hell / dunkel Projektionsmusters wird nicht transparentes Material selektiv auf dem transparenten Träger 28 abgeschieden. Das selektive Abscheidung wird dadurch bewirkt, indem auf dem Träger 28 elektrostatisch geladene Bereiche und elektrostatisch ungeladene Bereiche bspw. durch eine Korona-Entladevorrichtung gebildet werden. Anschließend wird das nicht transparente Material elektrisch geladen und an den geladenen Bereichen des Trägers 28 abgeschieden.

Die "Programmierung" der Maske 27 sowie das Verfahren der Beleuchtungseinheit 22 zum abschnittweise Bestrahlen des strahlungsreaktiven Kunststoffmaterials in der Herstellungszone 15 werden von einem Computer 19 gesteuert, der ein CAD-Programm laufen lässt.

Zur Bearbeitung einer Lage in der Herstellungszone werden nacheinander folgend sämtliche Abschnitte des in der Herstellungszone 15 aufgebrachten strahlungsreaktiven Materials unter Bildung eines Projektionsmusters aus bestrahlten und unbestrahlten Bereichen bestrahlt. Nach der Bestrahlung der gesamten Herstellungszone 15 werden die nicht bestrahlten und somit nicht gehärteten/vernetzten Bereiche mittels einer Spülstation 24 (nicht dargestellt in Figuren 1, 3 und 4) abgelöst.

Das Spülen kann, insbesondere im Falle von UV-härtbarem Harz, durch Wasser oder ein anderes Lösemittel oder eine Waschflüssigkeit oder im Falle von teilchenförmigen Materialien durch Anblasen oder Absaugen erfolgen.

Vor dem Aufbringen von Kunststoffmaterial zur Bildung einer nachfolgenden Lage ist es sinnvoll, wenn die durch das Ablösen des unbestrahlten Kunststoffmaterials gebildeten Hohlräume mit einem Opfermaterial gefüllt werden. Hierbei ist es sinnvoll wenn das Opfermaterial der unteren Lage frühestens nach dem Aufbringen der nächstfolgenden Lage abgelöst wird.

Nach der Herstellung einer oder mehrerer Lagen in der gesamten Herstellungszone 15 wird das Band um die Länge der Herstellungszone 15 bewegt, sodass der hergestellte Abschnitt der Papiermaschinenbespannung 20 aus der Herstellungszone 15 gelangt.

Wenn die gebildete Papiermaschinenbespannung 20 vom Band 10 abgenommen wird, läuft diese durch eine weitere Spülstation 29 und eine weitere Härtestation 25. In der Spülstation 29 wird das Opfermaterial 47 abgelöst, in der Härtestation 25 wird die gebildete Papiermaschinenbespannung 20 vollständig durchgehärtet.

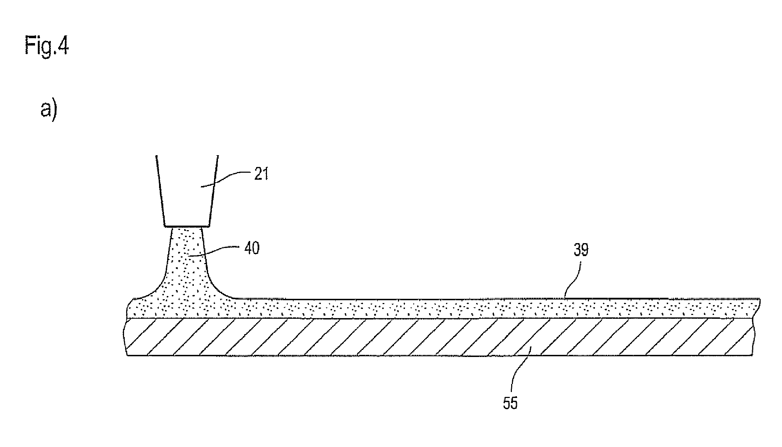

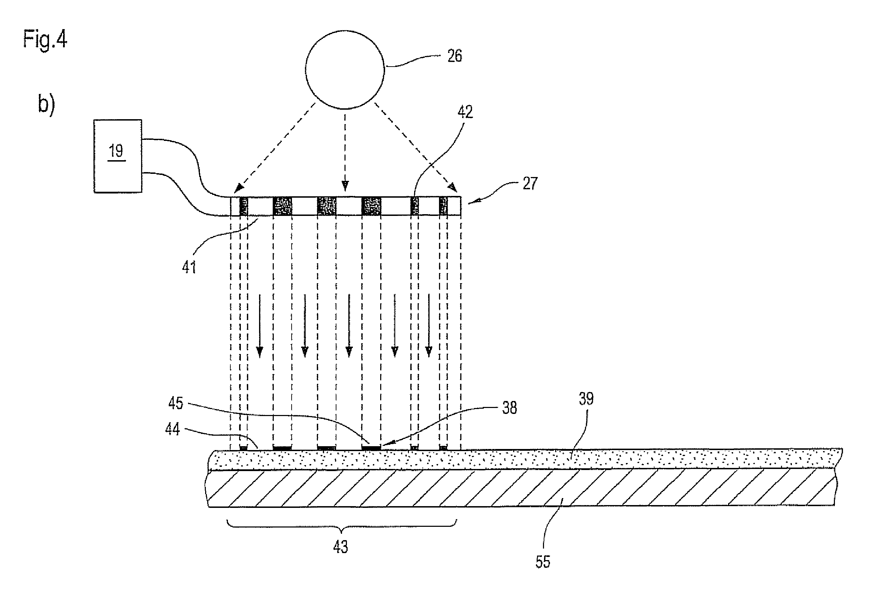

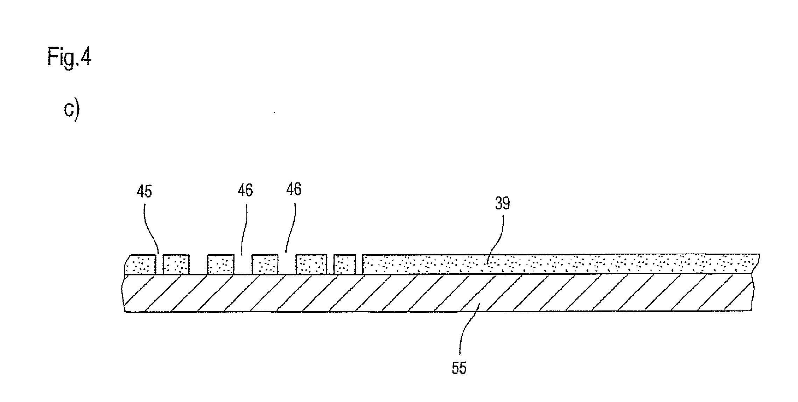

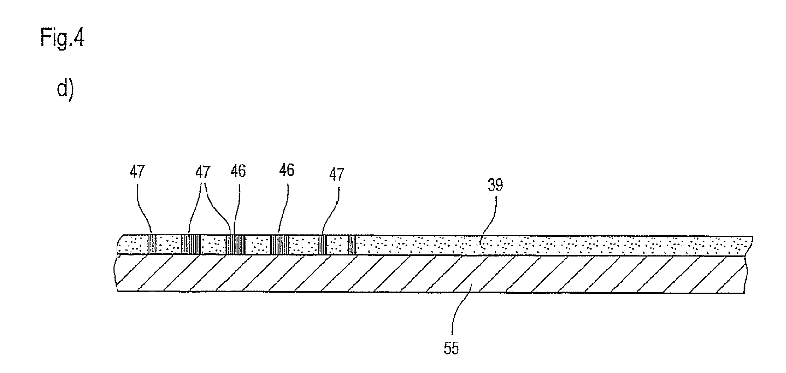

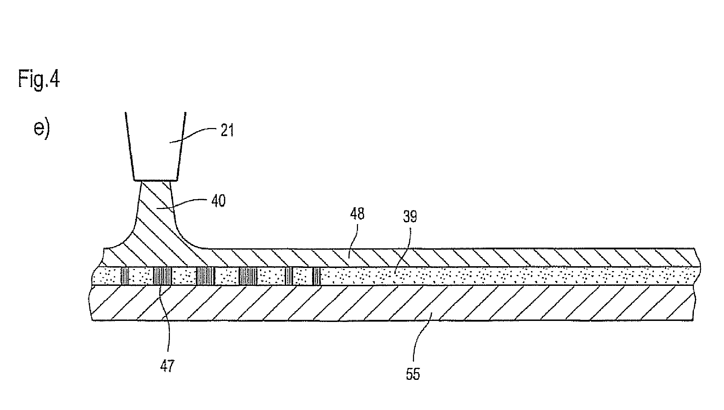

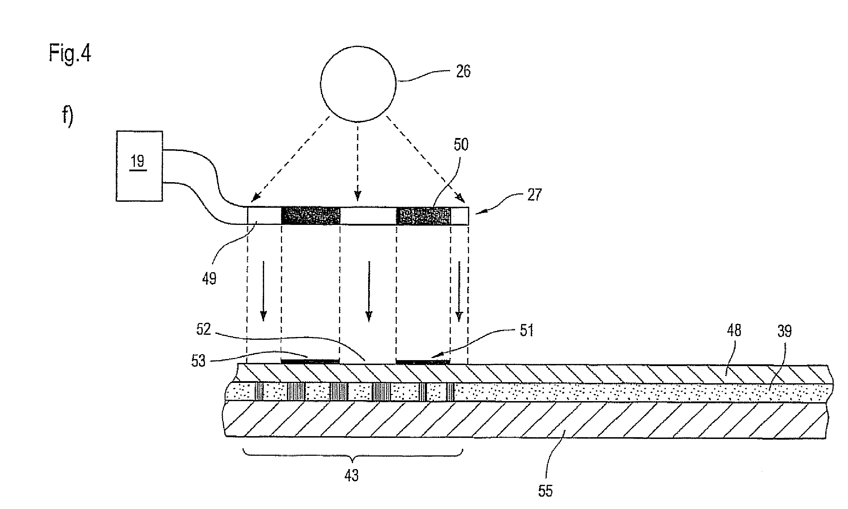

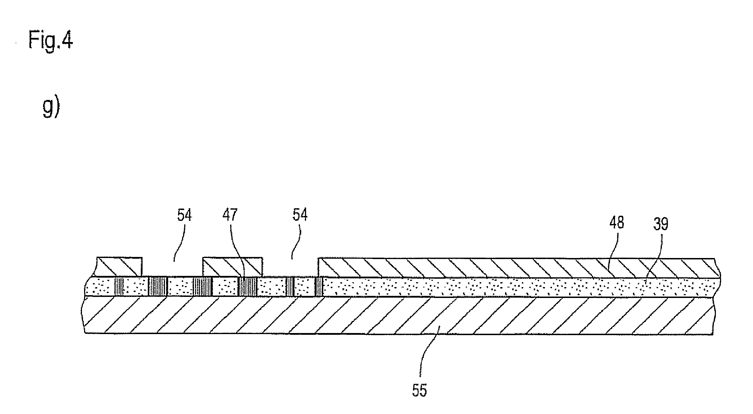

Das durch die oben beschriebenen Vorrichtungen durchführbare Verfahren kann Herstellung zweier aufeinander folgender Lagen die Schritte umfassen, wie dies aus den Figuren 4a bis 4h zu entnehmen ist:
- Aufbringen einer ersten Lage 39 eines strahlungsreaktiven Kunststoffmaterials 40 auf eine Arbeitsfläche oder eine bereits gebildete Lage 55 (Figur 4a).
- Programmieren der Maske 27 mittels eine Computers 19 zur Erzeugung von ersten transparenten Stellen 41 und von ersten nicht transparenten Stellen 42 der Maske (Figur 4b).
- Bestrahlen eines Abschnitts 43 des strahlungsreaktiven Kunststoffmaterials 40 mittels der Strahlungsquelle 27 und der Maske 27, wodurch auf dem Abschnitt 43 ein erstes hell / dunkel Muster 38 projektiert wird, so dass im Abschnitt 43 bestrahlte Bereiche 44 und unbestrahlte Bereiche 45 des strahlungsreaktiven Kunststoffmaterials 40 gebildet werden (Figur 4b).
- Ablösen der nicht bestrahlten Bereiche 45 unter Bildung von Hohlräumen 46 (Figur 4c).
- Auffüllen der Hohlräume 46 mit einem Opfermaterial 47, (ev. Härten und Glätten des Opfermaterials 47) (Figur 4d).
- Aufbringen einer zweiten Lage 48 des strahlungsreaktiven Kunststoffmaterials 40 in der Herstellungszone 15 (Figur 4e).
- Programmieren der Maske 27 zur Erzeugung von zweiten transparenten Stellen 49 und von zweiten nicht transparenten Stellen 50 der Maske (Figur 4f).
- Abschnittweise bestrahlen des strahlungsreaktiven Kunststoffmaterials 40 mittels der Strahlungsquelle 27 und der Maske 27, wodurch auf dem Abschnitt 43 ein zweites hell / dunkel Muster 51 projektiert wird, so dass im Abschnitt 43 bestrahlte Bereiche 52 und unbestrahlte Bereiche 53 des strahlungsreaktiven Kunststoffmaterials 40 gebildet werden (selbstverständlich ist es auch möglich, dass der Abschnitt der ersten und der zweiten Bestrahlung zueinander versetzt sind) (Figur 4f).
- Ablösen der nicht bestrahlten Bereiche 53 unter Bildung von Hohlräumen 54 (Figur 4g).
   Selbstverständlich können manche der Prozessschritte auch in einer anderen Reihenfolge ausgeführt werden ohne das Prinzip der Erfindung zu verändern.

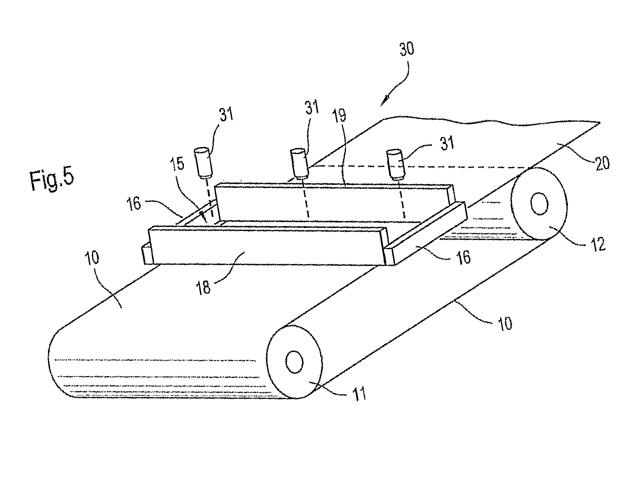

Die Figur 5 zeigt eine Vorrichtung zur Durchführung des in den Figuren 1 bis 4 beschriebenen Verfahrens mit dem Unterschied, dass die Beleuchtungseinheit 30 durch mehrere ein programmierbares Spiegelarray (DMD) enthaltende Beleuchtungsmodule 31 gebildet wird.

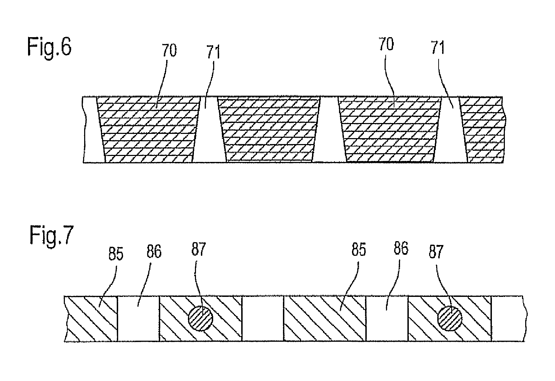

Fig. 6 und 7 zeigen schematisch zwei einfache Strukturen, die durch die in Fig. 1, 2, 3, 4 und 5 dargestellten Verfahren hergestellt werden können. Selbstverständlich können mit dem erfindungsgemäßen Verfahren auch komplexere Strukturen hergestellt werden.

Fig. 6 zeigt eine Membran, die Stege 70 und Öffnungen 71 umfasst, wobei die Stege 70 übereinander gelegte Lagen umfassen und die Öffnungen 71 so angeordnet sind, dass sie nach oben zu der zum Papier gerichteten (oberen) Seite der Membran schmäler werden. Solche konisch zulaufenden Öffnungen können zum Beispiel für die Verwendung in Entwässerungsfilzen erwünscht sein, sind aber mit anderen Verfahren nicht einfach herzustellen.

Fig. 7 zeigt einen Abschnitt einer weiteren Membran, die Stege 85 und Öffnungen 86 umfasst, wobei die letztgenannten wie üblich quadratisch, rechteckig oder kreisförmig sind. Verstärkungsfäden 87 sind in den Stegen 85 eingearbeitet, die auf dem Band in Längsrichtung (Maschinenrichtung) während des Strukturaufbaus durch eines der beschriebenen Verfahren abgelegt wurden. Alternativ könnten die Verstärkungsfäden quer zu dem Band in der Zone 15 abgelegt werden, bevor jeder Streifen hergestellt wird.

Eine weitere Möglichkeit (nicht dargestellt) ist, dass ein bahnförmiges Gebilde, insbesondere eine Papiermaschinenbespannung, unter Verwendung sowohl des Verfahrens mit UV-härtbarem Harz als auch desjenigen mit gesinterten Partikeln gebildet oder hergestellt wird, wobei z.B. eine Membran oder ein Gitter aus einem UV-gehärteten Harz hergestellt werden kann und dann eine gesinterte Struktur aus thermoplastischem Material auf der Oberseite des Gitters oder der Membran aufgebaut werden kann.

Die Papiermaschinenbespannungen, die unter Verwendung des Verfahrens der Erfindung geschaffen werden können, können die Eigenschaften bestehender einfacher oder komplexer Strukturen haben oder es können neue Strukturen geschaffen werden. Eine Struktur, die vorteilhaft sein kann, umfasst eine poröse Membran mit regellos verteilten und dimensionierten, durchgehenden Poren mit integrierten Stützstegen an der Maschinenseite, die Verstärkungsfäden in Maschinenrichtung aufweisen. Die Stege können die Form eines Netzes oder Gitters haben oder als Rippen in Maschinenrichtung an der Maschinenseite der Membran gebildet sein.

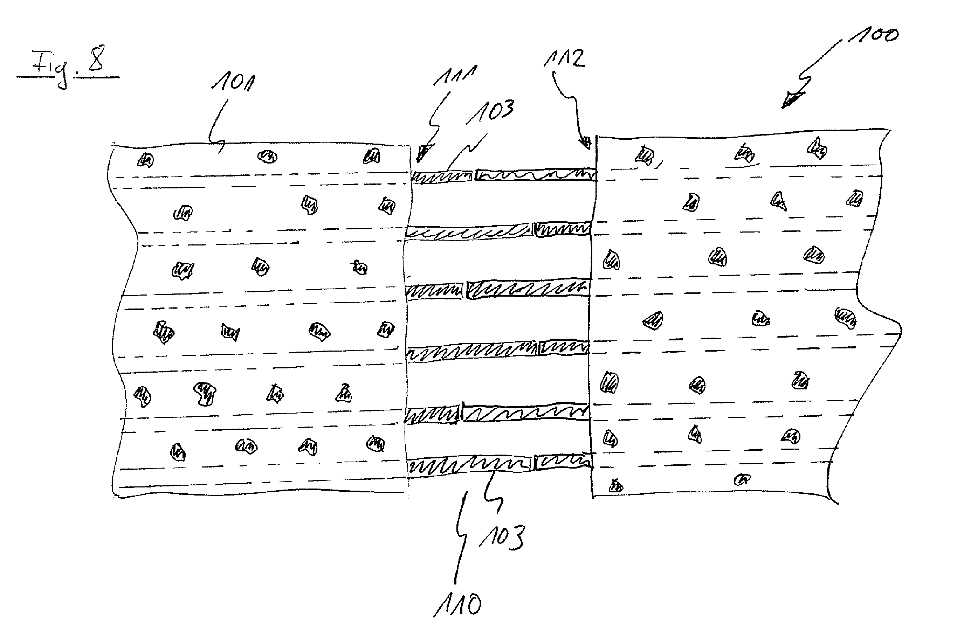

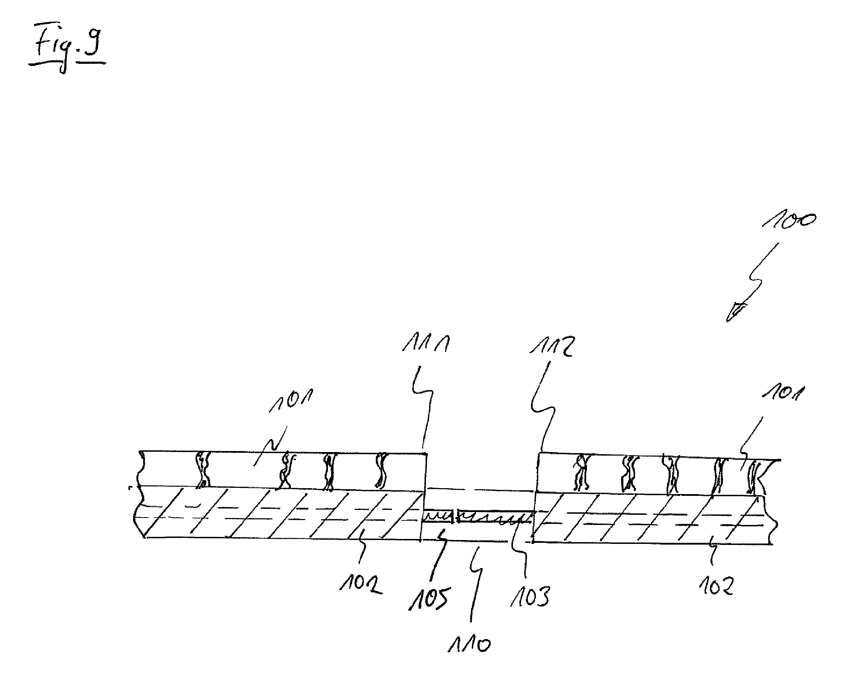

Das Band 10 in den oben genannten Ausführungsformen kann mit einem Trennmittel beschichtet sein, das eine Abnahme des Papiermaschinenstoffes, der durch das Verfahren gemäß der Erfindung hergestellt wurde, von dem Band ermöglicht, wonach es gereinigt und aufgerollt wird. Dieser Prozess würde fortgesetzt werden, bis eine Länge erzeugt ist, die einer bestimmten geplanten Länge der Papiermaschinenbespannung entspricht. Die Umformung des flachen Gebildes zu einer Endlosschleife kann als eigener Schritt ausgeführt werden, wie zum Beispiel in Fig. 8 und 9 dargestellt ist.

In der Ausführungsform der Papiermaschinenbespannung 100, die in Fig. 8 und 9 dargestellt ist, umfasst die Bespannung eine obere poröse Membran 101 mit mehreren regellos verteilten Poren, und eine ähnlich poröse untere Schicht mit Stegen 102, die sich in die Maschinenrichtung des Bandes erstrecken, in denen Verstärkungsfäden 103 in die Maschinenrichtung verlaufen. Zur Herstellung der Bespannung 100 als Endlosband werden deren beiden Enden 111, 112 einen Spalt 110 bildend gegeneinander liegend angeordnet. Im Spalt 110 wird eine erste Lage 105 bis zur Dicke der Schicht 102 aufgebaut.. Die Fäden 103, die von den Enden 111, 112 des Bespannung 100 herausragen, werden hierdurch mit in die Lage 105 eingebettet. Danach wird lagenweise eine Struktur, welche bspw, an die Struktur der porösen Membran 101 angepasst ist oder dieser entspricht über der Lage 105 aufgebaut, indem weitere Lagen aus vernetztem oder gesintertem Material abgelegt werden, wodurch die Enden 111, 112 der Bespannung 100 verbunden werden.

Wie aus Figur 8 zu erkennen ist, sind die Fäden 103 an jedem Ende 111 und 112 der Bespannung 100 abwechselnd lang und kurz geschnitten, so dass diese beim Verbinden der beiden Enden 111 und 112 ineinander greifen können, wodurch die Länge des Verbindungsbereichs zwischen den beiden Enden 111 und 112 verlängert und somit die Kraftaufnahme verteilt wird. Hierdurch wird die Gefahr der Ausprägung einer Schwachstelle in der Verbindungszone (Nahtbereich) erheblich reduziert.

Während die Fäden 103 in den Zeichnungen gerade dargestellt sind, versteht sich, dass sie in der Verbindungszone zwischen den Enden 111 und 112 mechanisch gekräuselt sein können. Dies verringert das Risiko eines Rutschens zwischen Fäden und der Kunststoffmatrix, da gekräuselte Fäden einem Herausziehen aus der Matrix besser widerstehen als gerade Fäden. Die Verbindung kann vor der Installation oder an der Papiermaschine unter Verwendung einer transportierbaren Vorrichtung erfolgen.

## Patentansprüche

1. Verfahren zur Herstellung eines einstückigen, bahnförmigen Gebildes, welches aus mehreren übereinander angeordneten Lagen aus Kunststoffmaterial aufgebaut ist, bei dem das Kunststoffmaterial lagenweise auf eine ausgedehnte Arbeitsfläche aufgebracht wird und bei dem das Kunststoffmaterial jeder Lage vor der Zugabe des Kunststoffmaterials der nächstfolgenden Lage weiterbearbeitet wird, wobei die Herstellung zumindest einer Lage die folgenden Schritte beinhaltet:
- Aufbringen eines strahlungsreaktiven Kunststoffmaterials, welches Bestandteil der Lage werden soll, auf die Arbeitsfläche oder die vorherige Lage,
- Bestrahlen zumindest eines Abschnitts des strahlungsreaktiven Kunststoffmaterials mit einer Beleuchtungseinrichtung, welche auf den Abschnitt ein hell / dunkel Muster projektiert, wodurch im Abschnitt bestrahlte und unbestrahlte Bereiche des strahlungsreaktiven Kunststoffmaterials gebildet werden,
- Ablösen der bestrahlten oder unbestrahlten Bereiche des Kunststoffmaterials.

2. Verfahren nach Anspruch 1,
**dadurch gekennzeichnet,**
**dass** sich Beleuchtungseinrichtung und das strahlungsreaktive Kunststoffmaterial während der Bestrahlung relativ zueinander bewegen oder relativ zueinander nicht bewegen.

3. Verfahren nach einem der vorangegangenen Ansprüche,
**dadurch gekennzeichnet,**
**dass** die abgelösten Bereiche mit einem Opfermaterial ausgefüllt werden.

4. Verfahren nach einem der vorangegangenen Ansprüche,
**dadurch gekennzeichnet,**
**dass** das Opfermaterial einer Lage frühestens nach dem Aufbringen der nächstfolgenden Lage abgelöst wird.

5. Verfahren nach einem der vorangegangenen Ansprüche,
**dadurch gekennzeichnet,**
**dass** das Kunststoffmaterial und das Opfermaterial durch ein flüssiges und / oder gasförmiges Medium abgelöst wird.

6. Verfahren nach einem der vorangegangenen Ansprüche,
**dadurch gekennzeichnet,**
**dass** als Opfermaterial Wachs Verwendung findet.

7. Verfahren nach einem der vorangegangenen Ansprüche,
**dadurch gekennzeichnet,**
**dass** das strahlungsreaktive Kunststoffmaterial beim Aufbringen in flüssigem oder festem Zustand ist.

8. Verfahren nach einem der vorangegangenen Ansprüche,
**dadurch gekennzeichnet,**
**dass** das strahlungsreaktive Kunststoffmaterial UV- oder IR- härtend ist.

9. Verfahren nach einem der vorangegangenen Ansprüche,
**dadurch gekennzeichnet,**
**dass** das UV- härtende Kunststoffmaterial ein acryliertes Epoxidharz ist.

10. Verfahren nach einem der vorangegangenen Ansprüche,
**dadurch gekennzeichnet,**
**dass** das IR- härtende Kunststoffmaterial ein teilchen- oder pulverförmiges, thermoplastisches Material ist, insbesondere PPS und / oder PEEK und / oder Polyolefin und / oder Polyamid.

11. Verfahren nach einem der vorangegangenen Ansprüche,
**dadurch gekennzeichnet,**
**dass** die Beleuchtungseinrichtung zumindest eine Strahlungsquelle und zumindest eine zwischen Strahlungsquelle und strahlungsreaktivem Kunststoffmaterial angeordnete Maske umfasst, wobei die Maske Bereiche aufweist die bewirken, dass die Strahlung auf das strahlungsreaktive Kunststoffmaterial gelenkt wird und wobei die Maske Bereiche aufweist, die bewirken, dass die Strahlung nicht auf das strahlungsreaktive Kunststoffmaterial gelenkt wird.

12. Verfahren nach einem der vorangegangenen Ansprüche,
**dadurch gekennzeichnet,**
**dass** die Bereiche der Maske, welche die Strahlung auf das strahlungsreaktive Kunststoffmaterial lenken und nicht frei einstellbar bzw. veränderbar sind.

13. Verfahren nach einem der vorangegangenen Ansprüche,
**dadurch gekennzeichnet,**
**dass** die Maske ein Spiegelarray aufweist und dass die die Strahlung auf das strahlungsreaktive Kunststoffmaterial lenkenden oder nicht lenkenden Bereiche der Maske durch die Position und / oder Kippung der einzelnen Spiegel des Spiegelarrays festgelegt werden. (ca. 1 ― 1,5 Mio. Spiegel)

14. Verfahren nach einem der vorangegangenen Ansprüche,
**dadurch gekennzeichnet,**
**dass** die Maske transparente und nicht transparente Bereiche aufweist.

15. Verfahren nach einem der vorangegangenen Ansprüche,
**dadurch gekennzeichnet,**
**dass** die transparenten und nicht transparenten Bereiche der Maske dadurch festgelegt werden, indem selektiv auf einem transparenten Träger nicht transparentes Material abgeschieden wird.

16. Verfahren nach einem der vorangegangenen Ansprüche,
**dadurch gekennzeichnet,**
**dass** die Maske ein Array aus Flüssigkristallenelementen (LC-Array) oder Halbleiterelementen aufweist und dass die die Strahlung auf das strahlungsreaktive Kunststoffmaterial lenkenden oder nicht lenkenden Bereiche der Maske durch die Einstellung der Strahlungsdurchlässigkeit der einzelnen Elemente des Arrays festgelegt werden.

17. Verfahren nach einem der vorangegangenen Ansprüche,
**dadurch gekennzeichnet,**
**dass** die Maske ein Array von Fresnellinsen aufweist.

18. Verfahren nach einem der vorangegangenen Ansprüche,
**dadurch gekennzeichnet,**
**dass** die Beleuchtungseinrichtung ein Array von Strahlungsquellen umfasst.

19. Verfahren nach einem der vorangegangenen Ansprüche,
**dadurch gekennzeichnet,**
**dass** die Bereiche des Arrays welche strahlen und welche nicht strahlen frei einstellbar ist.

20. Verfahren nach einem der vorangegangenen Ansprüche,
**dadurch gekennzeichnet,**
**dass** die Maske zur Ausbildung der transparenten bzw. strahlenden Bereiche und der nicht transparenten bzw. nicht strahlenden Bereiche programmgesteuert ist (CAD-Steuerung, STL-Daten).

21. Verfahren nach einem der vorangegangenen Ansprüche,
**dadurch gekennzeichnet,**
**dass** das Aufbringen und / oder das Weiterverarbeiten der einzelnen Lagen in Längsrichtung und / oder in Querrichtung des bahnförmigen Gebildes abschnittweise (unter Bildung von aneinander grenzenden und / oder einander zumindest abschnittweise überlappenden Materialabschnitten erfolgt; Aufbringen und Weiterbehandeln Abschnitt für Abschnitt).

22. Verfahren nach einem der vorangegangenen Ansprüche,
**dadurch gekennzeichnet,**
**dass** Materialabschnitte aufeinander folgender Lagen relativ zueinander versetzt sind.

23. Verfahren nach einem der vorangegangenen Ansprüche,
**dadurch gekennzeichnet,**
**dass** mehrere Beleuchtungseinrichtungen in Querrichtung des bahnförmigen Gebildes angeordnet sind.

24. Verfahren nach einem der vorangegangenen Ansprüche,
**dadurch gekennzeichnet,**
**dass** die Beleuchtungseinrichtung in Längsrichtung, in Querrichtung und senkrecht zu Längs- und Querrichtung bewegbar ist.

25. Verfahren nach einem der vorangegangenen Ansprüche,
**dadurch gekennzeichnet,**
**dass** als Strahlungsquelle in Kombination oder allein Röntgen-, UV-, IR-Lichtquellen, Elektronenquellen Verwendung finden.

26. Verfahren nach einem der vorangegangenen Ansprüche,
**dadurch gekennzeichnet,**
**dass** in eine Lage Fäden eingebettet sind, welche sich in Längsrichtung und / oder quer zur Längsrichtung des bahnförmigen Gebildes erstrecken.

27. Verfahren nach einem der vorangegangenen Ansprüche,
**dadurch gekennzeichnet,**
**dass** die ausgedehnte Arbeitsfläche durch ein umlaufendes Band gebildet wird.

28. Verfahren nach einem der vorangegangenen Ansprüche,
**dadurch gekennzeichnet,**
**dass** die ausgedehnte Arbeitsfläche ermöglicht ein bahnförmiges Gebilde mit einer Querausdehnung von mehr als 5m, bevorzugt mehr als 8m, besonders bevorzugt von mehr als 11 m herzustellen.

29. Verfahren nach einem der vorangegangenen Ansprüche,
**dadurch gekennzeichnet,**
**dass** nach Herstellung eines Materialabschnitts des Gebildes dieser vom umlaufenden Band zur Ermöglichung der Herstellung eines weiteren Materialabschnitts des bahnförmigen Gebildes abgenommen wird.

30. Verfahren nach einem der vorangegangenen Ansprüche,
**dadurch gekennzeichnet,**
**dass** es sich bei dem bahnförmigen Materialabschnitt um einen Bestandteil einer Papiermaschinenbespannung, insbesondere um eine Grundstruktur oder Zwischenschicht eines Formier- oder Trockensiebs oder Pressfilzes oder Transport- oder Glättbandes handelt oder dass es sich um eine Papiermaschinenbespannung, insbesondere um ein Formier- oder Trockensieb oder Pressfilz oder Transport- oder Glättband handelt.

31. Verfahren nach einem der vorangegangenen Ansprüche,
**dadurch gekennzeichnet,**
**dass** jede Lage nach Fertigstellung eine Dicke zwischen 0,01 mm und 1,0mm, insbesondere 0,025mm und 0,125mm aufweist.

32. Verfahren nach einem der vorangegangenen Ansprüche,
**dadurch gekennzeichnet,**
**dass** durch das Aufbringen und Weiterverarbeiten der Lagen aus Kunststoffmaterial drei-dimensionale Strukturen, insbesondere Perforationen mit sich senkrecht zu Längs- und Querrichtung des Materialabschnitts ändernder Form, Gestalt und Größe hergestellt wird.

33. Verfahren nach einem der vorangegangenen Ansprüche,
**dadurch gekennzeichnet,**
**dass** zur Bildung eines Endlosbandes aus dem bahnförmigen Gebilde dessen gegenüberliegenden Enden mittels einem lithographischen Verfahren miteinander verbunden werden.
